# EUROPÄISCHE PATENTSCHRIFT

(11) **EP 0 548 297 B1**
(45) Veröffentlichungstag und Bekanntmachung des Hinweises auf die Patenterteilung: **21.06.1995**
(21) Anmeldenummer: 92905484.9
(22) Anmeldetag: 26.02.1992
(51) Int. Cl.: F01C 1/46

(54) **SCHWENKKOLBENMASCHINE**
OSCILLATING PISTON ENGINE
MOTEUR A PISTONS OSCILLANTS

(30) Priorität: 12.07.1991 DE 4123176
(43) Veröffentlichungstag der Anmeldung: 30.06.1993
(73) Patentinhaber: Hüttlin, Herbert, D-79585 Steinen (DE)
(72) Erfinder: Hüttlin, Herbert, D-79585 Steinen (DE)
(74) Vertreter: Goetz, Rupert, Dipl.-Ing.
(86) Internationale Anmeldenummer: EP9200399
(87) Internationale Veröffentlichungsnummer: WO9301395

(56) Entgegenhaltungen:
- CA-A- 997 998
- GB-A- 509 953
- US-A- 1 983 033

## Beschreibung

Die Erfindung betrifft eine Schwenkkolbenmaschine mit
- einem Gehäuse, in dem mehrere Gehäusekammern zwischen zwei Stirnwänden rings um eine zentrale Gehäuseachse ausgebildet sind,
- mehreren Kolben, die um je eine zur Gehäuseachse parallele Kolbenachse schwenkbar sind und gegen die beiden Stirnwände abgedichtet sind,
- einer zentralen Welle, die um die Gehäuseachse drehbar ist und mit den Kolben in Antriebsverbindung steht, und
- Ein- und Auslaßkanälen zum Zu- bzw. Abführen eines Fluids zu bzw. von den Gehäusekammern.

Bei einer bekannten Schwenkkolbenmaschine dieser Gattung (DE 2363077 B2) sind rings um die zentrale Gehäuseachse vier Zylinderräume angeordnet, die von je einem kreiszylindrischen Innenwandabschnitt und je zwei ebenen, radial nach außen zu einem Scheitel konvergierenden Seitenwandabschnitten begrenzt sind. Jeder der vier Zylinderräume ist durch einen im Bereich des Scheitels schwenkbar gelagerten, plattenförmigen Kolben in zwei Gehäusekammern unterteilt. Die insgesamt vier Kolben sind durch je ein Kurbelgetriebe mit je einem Zahnrad verbunden, das mit einem auf der zentralen Welle befestigten zentralen Zahnrad in Eingriff steht. Auf diese Weise sind die Schwenkbewegungen der vier Kolben derart miteinander synchronisiert, daß jeder von ihnen eine scheibenwischerartig hinund hergehende Bewegung ausführt, bei der er gegen die beiden Stirnwände und gegen den kreiszylindrischen Innenwandabschnitt abdichtet.

Eine ähnliche Anordnung mit nur drei schwenkbaren Kolben ist aus der FR 800753 A1 bekannt.

Im Vergleich zu diesen beiden Anordnungen radial nach außen gekehrt ist die Anordnung der Kolben bei einer aus der DE 1947406 A1 bekannten Schwenkkolbenmaschine. Dort sind vier Kolben einander eng benachbart an einem zentralen Gehäuseteil schwenkbar gelagert und mit ihren radial äußeren Kanten abdichtend an je einem kreiszylindrischen äußeren Gehäusewandabschnitt hin- und herbewegbar, wobei jeder der Kolben mit jedem der beiden benachbarten Kolben eine Gehäusekammer begrenzt. Hier sind also im Gegensatz zu den beiden zuvor beschriebenen Schwenkkolbenmaschinen Zwischenwände zwischen benachbarten Kolben nicht vorgesehen.

Allen drei beschriebenen bekannten Schwenkkolbenmaschinen ist gemeinsam, daß eine gute Abdichtung zwischen den achsparallelen, radial äußeren (DE 2363077 B1 und FR 800753 A1) bzw. radial inneren (DE 1947406 A1) Dichtkanten der Kolben und den zugehörigen kreiszylindrischen Gehäusewandabschnitten nur dann möglich ist, wenn das Gehäuse in diesen Abschnitten form- und maßgenau bearbeitet ist und sich bei den üblichen Belastungen durch Kraft- und Wärmeeinflüsse nicht verzieht. Ein Ausgleich der im Betrieb auftretenden Massenkräfte erster und höherer Ordnung ist zwar bei den bekannten Schwenkkolbenmaschinen mit vier gleichen Schwenkkolben im Prinzip möglich, jedoch nur über die Kurbelgetriebe, welche die Kolben mit der zentralen Welle verbinden. Diese Getriebeverbindungen haben eine unvermeidliche Drehelastizität, so daß die auf die einzelnen Kolben einwirkenden, in jedem beliebigen Zeitpunkt sehr unterschiedlichen Kräfte Getriebeschwingungen hervorrufen können, die schon als solche störend sind und den Massenausgleich beeinträchtigen können.

Der Erfindung liegt deshalb die Aufgabe zugrunde, eine Schwenkkolbenmaschine mit verbessertem Zusammenspiel der einzelnen Kolben zu schaffen.

Die Aufgabe ist erfindungsgemäß ausgehend von einer Schwenkkolbenmaschine der eingangs genannten Gattung dadurch gelöst, daß
- die Kolben als zweiarmige Hebel ausgebildet sind, deren Arme mit je einem benachbarten Kolbenarm über ineinandergreifende Verzahnungen in abdichtendem Wälzeingriff stehen, und
- jede Gehäusekammer von einem Paar in Wälzeingriff stehender Kolbenarme begrenzt ist.

Durch den abdichtenden gegenseitigen Eingriff der Kolbenarme vereinfacht sich die Abdichtung der Kolben gegenüber dem Gehäuse beträchtlich. Infolgedessen bleibt eine ausreichende Abdichtung auch dann noch erhalten, wenn das Gehäuse sich durch Erhitzung verformt. Die für einen vollständigen Massenausgleich zu übertragenden Kräfte werden unmittelbar zwischen den Kolben, und somit weitgehend schwingungsfrei, übertragen. Bei den gegenläufigen Schwenkungen der miteinander in Eingriff stehenden Kolben läßt sich Luft oder Brennstoff-Luftgemisch in den Gehäusekammern in beliebigem Verhältnis verdichten, sodaß sich die erfindungsgemäße Schwenkkolbenmaschine sowohl als Ottomotor wie als Dieselmotor gestalten und mit beliebigen flüssigen oder gasförmigen Brennstoffen, beispielsweise Kohlenwasserstoffen, mit hohem thermodynamischen Wirkungsgrad betreiben läßt.

Vorteilhafte Weiterbildungen der Erfindung ergeben sich aus den Unteransprüchen.
Ein Ausführungsbeispiel der Erfindung wird im folgenden anhand schematischer Zeichnungen mit weiteren Einzelheiten erläutert. Es zeigen:
- Fig. 1: eine als Viertakt-Ottomotor ausgebildete Schwenkkolbenmaschine im Längsschnitt I-I gemäß Fig. 2,
- Fig. 2: den Querschnitt II-II gemäß Fig. 1,
- Fig. 3: einen der Fig. 2 entsprechenden Querschnitt einer abgewandelten Schwenkkolbenmaschine,
- Fig. 4: einen Querschnitt einer weiteren, als ViertaktOttomotor ausgebildeten Schwenkkolbenmaschine im Zündzeitpunkt,
- Fig. 5: einen entsprechenden Querschnitt, jedoch 30° nach dem Zündzeitpunkt,
- Fig. 6: den Längsschnitt VI-VI in Fig. 5,
- Fig. 7: den Querschnitt VII-VII in Fig. 6,
- Fig. 8: Querschnitte der in Fig. 1 bis 7 dargestellten Schwenkkolbenmaschine in acht Zeitpunkten, die in Abständen von 10° aufeinanderfolgen.
- Fig. 9: einen Querschnitt einer weiter abgewandelten, ebenfalls als Viertakt-Ottomotor ausgebildeten Schwenkkolbenmaschine, und
- Fig. 10: einen Querschnitt einer als Pumpe oder Verdichter ausgebildeten Schwenkkolbenmaschine.

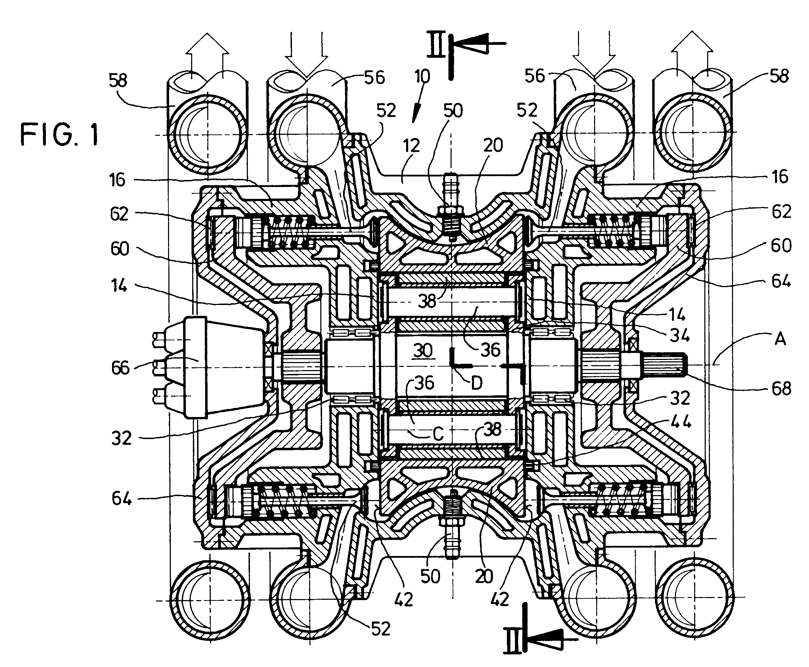

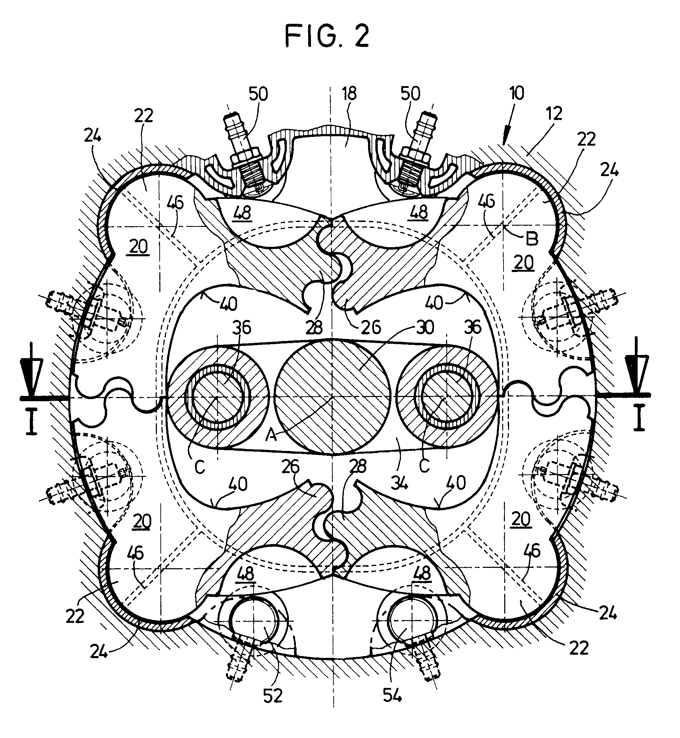

Die in Fig. 1 und 2 dargestellte Schwenkkolbenmaschine hat ein Gehäuse 10 mit einem zentralen Gehäuseteil, das eine Umfangswand 12 bildet, und zwei seitlich angebauten Gehäuseteilen, die je eine Stirnwand 14 mit je einem ringförmig nach außen ragenden Fortsatz 16 bilden. Das Gehäuse 10 ist in bezug auf eine zentrale Gehäuseachse A im wesentlichen rotationssymmetrisch; die Umfangswand 12 ist radial innen im wesentlichen kreiszylindrisch und die Stirnwände 14 sind axial innen im wesentlichen eben. Im Innenraum des Gehäuses 10 sind vier um je 90° gegeneinander versetzte Gehäusekammern 18 von je einem Kolbenpaar begrenzt.

Die Kolbenpaare sind von insgesamt vier zweiarmigen, bogenförmigen Kolben 20 gebildet, die an ihrer radial äußeren Seite je eine teilzylindrische Lagerstelle 22 aufweisen und mit dieser in einem komplementären Lager 24 an der Innenseite der Umfangswand 12 gelagert sind. Die Lagerstelle 22 jedes Kolbens 20 bildet mit dem zugehörigen Lager 24 eine Kolbenachse B, um die der betreffende Kolben schwenkbar ist. Im dargestellten Beispiel sind die Lagerstellen 22 der Kolben 20 konvex und die Lager 24 an der Umfangswand 12 dementsprechend konkav; es ist jedoch auch eine umgekehrte Gestaltung möglich.

Jeder der Kolben 20 hat am Ende jedes seiner beiden Arme eine Verzahnung 26 bzw. 28, die in eine komplementäre Verzahnung 28 bzw. 26 des benachbarten Kolbens 20 eingreift. Mit den Verzahnungen 26 und 28 sind die Kolben 20 derart aneinander abwälzbar, daß sämtliche Kolben nur gleichzeitig und um gleiche Winkel, benachbarte Kolben jedoch in entgegengesetzten Richtungen, zwischen Endstellungen hin- und herschwenkbar sind, in denen jeweils ein Arm jedes Kolbens an der Umfangswand 12 anliegt.

Durch das Gehäuse 10 erstreckt sich eine zentrale Welle 30, deren geometrische Achse mit der Gehäuseachse A übereinstimmt. Die zentrale Welle 30 ist in den beiden Stirnwänden 14 in je einem Wellenlager 32 gelagert und weist zwischen den beiden Stirnwänden zwei parallele Traversen 34 auf, die durch ein Paar Lagerbolzen 36 miteinander verbunden sind. Die beiden Lagerbolzen 36 sind in bezug auf die Gehäuseachse A exzentrisch angeordnet; ihre Achsen C erstrecken sich, einander diametral gegenüber, parallel zur Gehäuseachse A.

Auf jedem der beiden Lagerbolzen 36 ist ein Kurvenfolgeglied 38 in Form einer zylindrischen Walze frei drehbar gelagert. Die Kurvenfolgeglieder 38 sind auf Laufflächen 40 an der radial inneren Seite der Kolben 20 abwälzbar. Die Lauffläche 40 jedes einzelnen Kolbens 20 hat im Querschnitt gemäß Fig. 2 ungefähr die Form einer Parabel, deren Achse die zugehörige Kolbenachse B schneidet, und deren geringster Krümmungsradius geringfügig größer ist als der halbe Außendurchmesser der Kurvenfolgeglieder 38.

Die Kolben 20 haben je zwei parallele Stirnflächen 42, die gegen je eine der Stirnwände 14 durch eine ringförmige Dichtung 44 sowie je eine von dieser ausgehende radiale Dichtung 46 abgedichtet sind. Die ringförmige Dichtung 44 hat in vier Bereichen, die radial innerhalb je eines der vier Lager 24 angeordnet sind, die Form je eines Viertelkreises; diese Viertelkreise sind durch je einen geradlinigen Abschnitt miteinander verbunden. Die Dichtungen 44 und 46 sind sämtlich in Nuten der Stirnwände 14 eingebettet.

An der radial äußeren Seite jedes der beiden Arme jedes Kolbens 20 ist ein annähernd halbkugelförmiger Brennraun 48 ausgebildet. Somit sind den vier Gehäusekammern 18 je zwei Brennräume 48 zugeordnet. In jede der Gehäusekammern 18 ragen zwei Zündkerzen 50 hinein, die auf die Mittelpunkte der beiden zugehörigen Brennräume 48 ausgerichtet sind.

Jede Gehäusekammer 18 ist ferner durch ein Paar Einlaßventile 52 sowie ein Paar Auslaßventile 54 mit einem Paar Einlaßkanäle 56 bzw. einem Paar Auslaßkanäle 58 verbunden.

Die Ein- und Aulaßventile 52 und 54 sind in je einer der Stirnwände 14 angeordnet und von einem Paar Kurvenscheiben 60 gesteuert, die im wesentlichen radial innerhalb je eines der ringförmigen Fortsätze 16 angeordnet, auf der zentralen Welle 30 befestigt und über je ein Axialdrucklager 62 an je einem Gehäusedeckel 64 abgestützt sind.

Schließlich ist ein Ende der zentralen Welle 30 mit einem Zündverteiler 66 verbunden. Das andere Wellenende 68 ist mit einem Vielnutprofil ausgestattet, an das sich ein anzutreibendes Aggregat anschließen läßt.

Die abgebildete Schwenkkolbenmaschine ist für einen Betrieb als Viertakt-Ottomotor vorgesehen. Es sei angenommen, die in Fig. 2 linke Gehäusekammer 18 und die beiden mit ihr in Verbindung stehenden Brennräume 48 enthielten verdichtetes Brennstoff-Luftgemisch, die zugehörigen Ein- und Auslaßventile 52 und 54 seien geschlossen und die zentrale Welle 30 drehe sich im Uhrzeigersinn. Wenn nun das Gemisch in den beiden linken Brennräumen 48 gezündet wird, schwenken die miteinander in Eingriff stehenden Arme des linken oberen und des linken unteren Kolbens 20 nach innen, in Richtung zur Gehäuseachse A hin. Gleichzeitig schwenken die beiden miteinander in Eingriff stehenden Arme des linken oberen und des rechten oberen Kolbens 20 nach oben und verdichten Brennstoff-Luftgemisch in der oberen Gehäusekammer 18, deren Ein- und Auslaßventile 52 und 54 ebenfalls geschlossen sind. Gleichzeitig schwenken die ineinandergreifenden Arme des rechten oberen und des rechten unteren Kolbens 20 nach innen, sodaß in die rechte Gehäusekammer 18, deren Einlaßventile 52 geöffnet und deren Auslaßventile 54 geschlossen sind, frisches Gemisch, das vorverdichtet sein kann, einströmt. Ebenfalls gleichzeitig schwenken die ineinandergreifenden Arme des rechten unteren und des linken unteren Kolbens 20 nach außen, sodaß aus der unteren Gehäusekammer 18, deren Einlaßventile 52 geschlossen und deren Auslaßventile 54 geöffnet sind, zuvor verbranntes Gemisch ausgestoßen wird. Währenddessen führt die zentrale Welle 30 eine Drehung um 90° im Uhrzeigersinn aus.

Die nächste Zündung findet in der oberen Gehäusekammer 18 statt und alle beschriebenen Vorgänge wiederholen sich in Gehäusekammern 18, die gegenüber den entsprechenden Gehäusekammern des vorangegangenen Zyklus um 90° im Uhrzeigersinn versetzt sind.

Im Laufe einer vollen Umdrehung der zentralen Welle 30 finden somit vier vollständige Zyklen mit je vier Takten statt. Dabei bleibt der Gesamtschwerpunkt aller bewegten Teile ständig an einer und derselben Stelle D auf der Gehäuseachse A. Es findet also ein vollständiger statischer und dynamischer Massenausgleich statt. Die Laufruhe der beschriebenen Maschine ist deshalb mindestens ebenbürtig derjenigen eines Hubkolben-Reihenmotors mit sechs Zylindern.

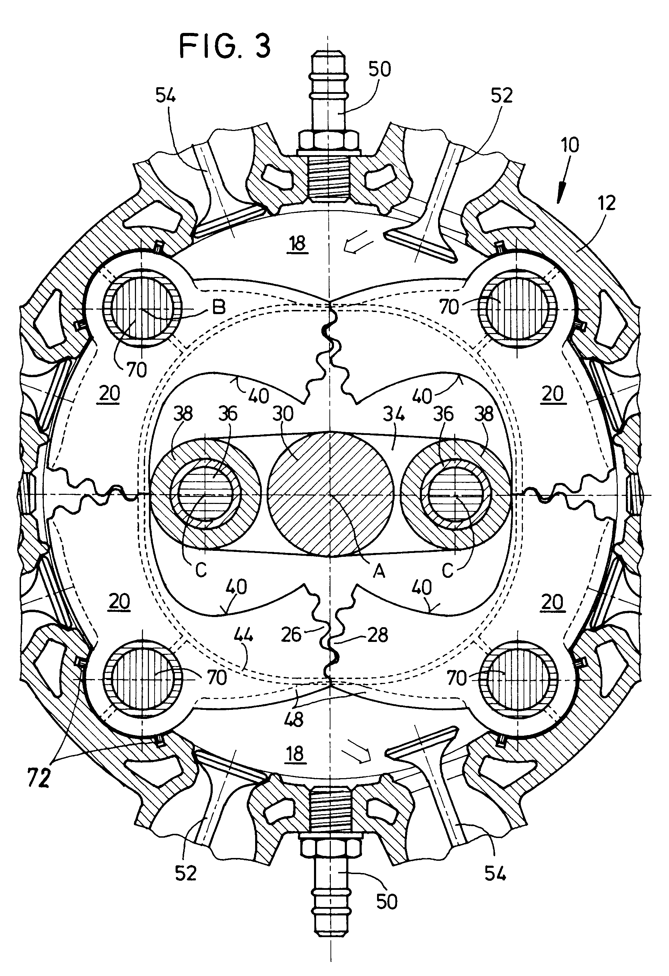

Bei dem in Fig. 3 dargestellten Ausführungsbeispiel sind die Kolben 20 auf je einen eigenen Lagerbolzen 70 gelagert, der in den beiden Stirnwänden 14 befestigt ist, und dessen geometrische Achse die Kolbenachse B ist. Die Lagerstellen 22 sind gemäß Fig. 3 gegen das Gehäuse 10 durch in dieses eingebettete Dichtleisten 72 abgedichtet, damit die Gehäusekammern 18 auch dann sicher voneinander getrennt sind, wenn die Lagerstellen gegenüber dem Gehäuse verhältnismäßig großes Spiel haben. Bei dem Ausführungsbeispiel gemäß Fig. 1 und 2 genügt hingegen die unmittelbare Berührung zwischen den Lagerstellen 22 und zugehörigen Lagern 24, um die Gehäusekammern 18 voneinander getrennt zu halten.

Das Ausführungsbeispiel gemäß Fig. 3 unterscheidet sich von dem in Fig. 1 und 2 dargestellten ferner dadurch, daß in jeder Gehäusekammer 18 nur eine Zündkerze 50 angeordnet ist. Die Ein- und Auslaßventile 52 und 54 sind radial angeordnet und von nicht dargestellten Steuerwellen gesteuert, die in üblicher Weise von der zentralen Welle 30 angetrieben werden.

Anstelle der in Fig. 3 dargestellten Lagerbolzen 70 können Wellen vorgesehen sein, die mit je einem der Kolben 20 fest verbunden sind und die zentrale Welle 30 z.B. über Zahnräder und Richtungsgesperre oder über Kurbelgetriebe antreiben. In diesem Fall können die Traversen 34, Lagerbolzen 36 und Kurvenfolgeglieder 38 fortgelassen werden.

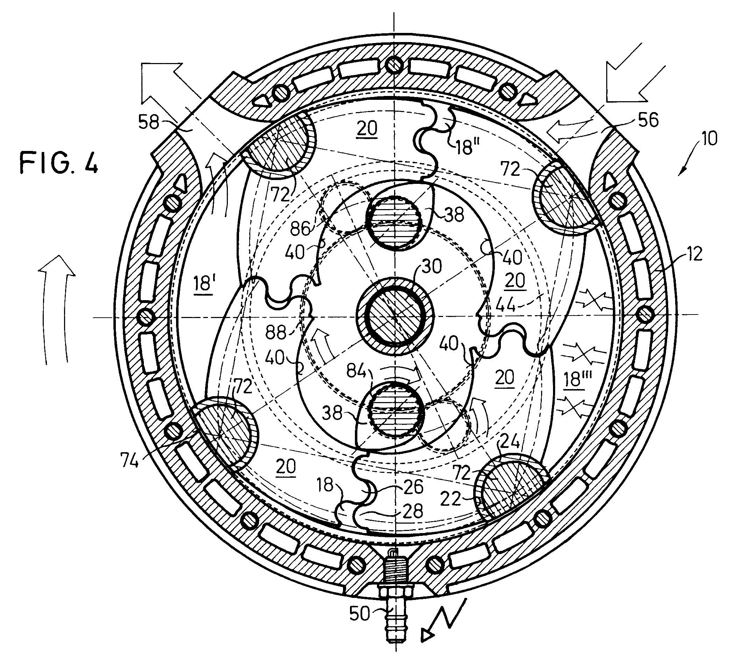

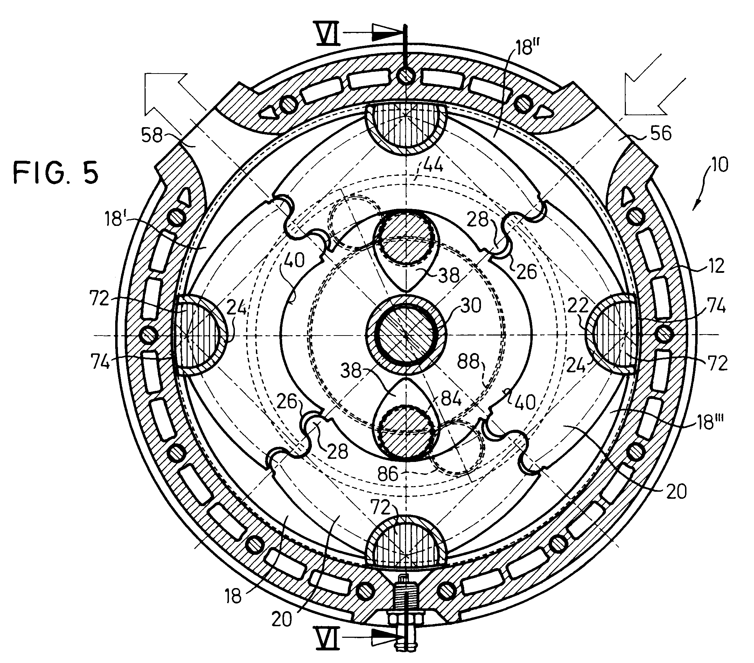

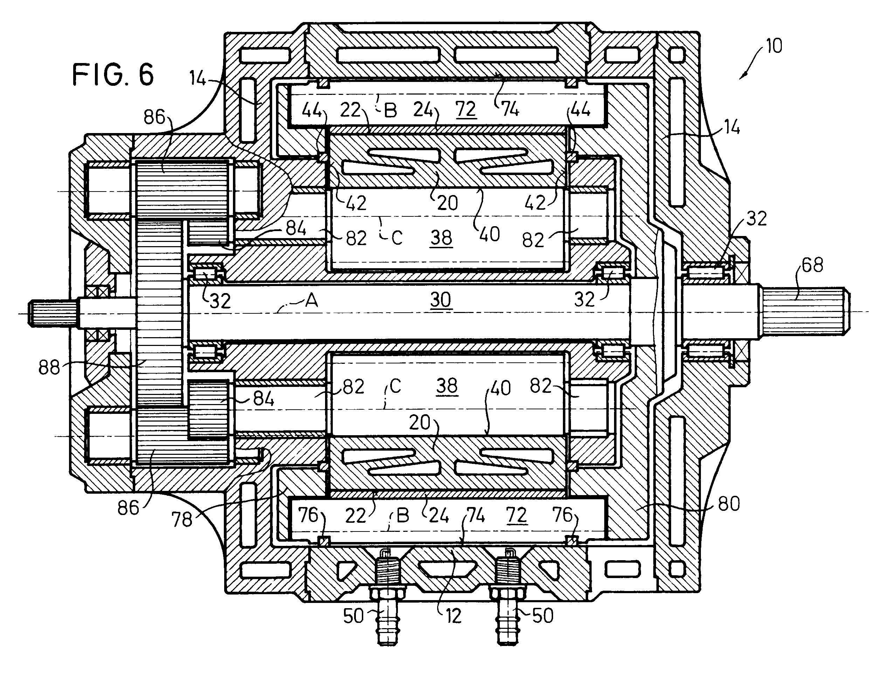

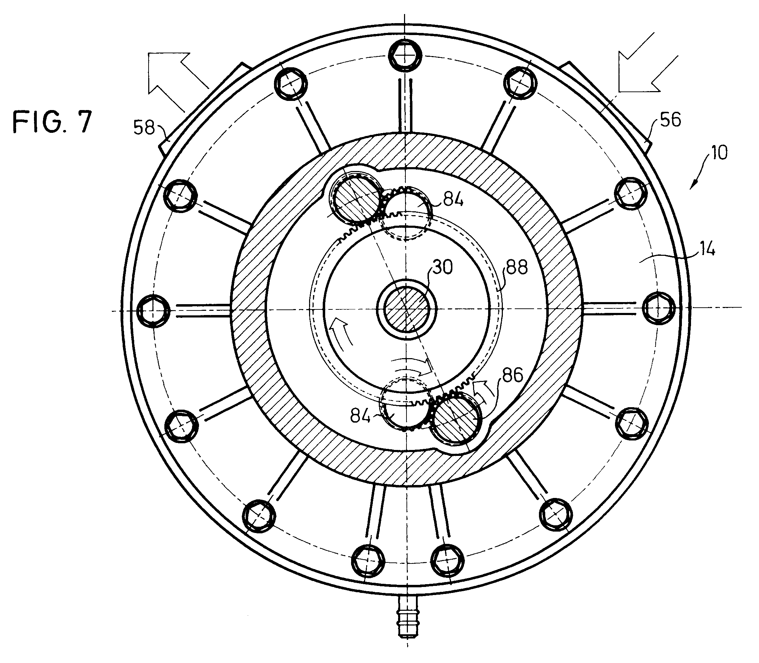

Die in Fig. 4 bis 10 dargestellten Ausführungsformen unterscheiden sich von Fig. 1 bis 3 vor allem in folgenden Merkmalen:

Die vier Kolben 20, die wiederum als zweiarmige Hebel ausgebildet sind, haben je eine konkave Lagerstelle 22, mit der sie auf je einer Lager 24 in Gestalt einer teilzylindrischen Hülse gelagert sind. Jedes dieser Lager 24 ist auf einem Stab 72 befestigt, der sich parallel zur Gehäuseachse A erstreckt und eine teilzylindrische Außenfläche 74 aufweist, mit der er, durch Dichtungen 76 in axialer Richtung abgedichtet, an der Umfangswand 12 des Gehäuses 10 gleitend entlangbeweglich ist. Die Lager 24 erstrecken sich ebenfalls abdichtend bis zur Umfangswand 12. Für die vier Kolben 20 sind insgesamt vier Stäbe 72 vorgesehen, die in Abständen von 90° gegeneinander versetzt je mit einem Ende an einem Ring 78 und mit ihrem anderen Ende an einer Scheibe 80 gehalten sind. Dabei hat jeder Stab 72 Spiel in Richtung radial nach außen, von der Gehäuseachse A weg.

Die Scheibe 80 ist an der zentralen Welle 30 befestigt. Die Stäbe 72, der Ring 78 und die Scheibe 80 bilden eine Art Käfig, der sich zusammen mit der zentralen Welle 30 dreht. Wegen des genannten Radialspiels werden die Stäbe 72 und die auf ihnen befestigten Lager 24 durch Zentrifugalkräfte gegen die Umfangswand 12 des Gehäuses gedrückt, so daß die vier Gehäusekammern 18, die ebenso wie die Kolben 20 an der Drehung des genannten Käfigs teilnehmen, gegeneinander zuverlässig abgedichtet werden.

Die Kurvenfolgeglieder 38 sind als Exzenterwalzen mit einem ungefähr tropfenförmigen Profil ausgebildet und mittels je eines Paars Lagerzapfen 82 in den Stirnwänden 14 des Gehäuses 10 gelagert. Die an den Kolben 20 ausgebildeten Laufflächen 40 haben gemäß Fig. 4 bis 10 je ein kreisbogenförmiges Profil, auf dem die Kurvenfolgeglieder 38 schlupffrei abwälzbar sind. Jedes der Kurvenfolgeglieder 38 ist gemäß Fig. 4 bis 10 mit einem Ritzel 84 fest verbunden oder einstückig ausgebildet, und jedes dieser Ritzel steht mit einem Zwischenrad 86 in Zahneingriff. Somit sind insgesamt vier Zwischenräder 86 vorgesehen, und diese stehen in Zahneingriff mit einem zentralen Zahnrad 88, das auf der zentralen Welle 30 befestigt ist und viermal soviel Zähne hat wie jedes der Ritzel 84. Das Übersetzungsverhältnis zwischen der zentralen Welle 30 und jedem der Kurvenfolgeglieder 38 beträgt als 1:4.

Übereinstimmend mit Fig. 1 bis 3 ist gemäß Fig. 4 bis 10 an den Stirnwänden 14 des Gehäuses 10 je eine ringförmige Dichtung 44 angeordnet, die jedoch kreisförmig ist und nicht nur gegen die Kolben 20 sondern auch gegen den Ring 78 bzw. die Scheibe 80 abdichtet.

Im Gegensatz zu Fig. 1 bis 3 ist bei den Ausführungsformen gemäß Fig. 4 bis 10 kein Ventil vorgesehen. Gemäß Fig. 4 bis 9 weist das Gehäuse 10 nur einen Einlaßkanal 56 und einen Auslaßkanal 58 auf, und diese Kanäle werden unmittelbar von den Kolben 20 gesteuert, also taktweise freigegeben und versperrt. Ferner ist gemäß Fig. 4 bis 9 nur ein einziges Paar Zündkerzen 50 vorgesehen, und dieses ist gegen den Einlaßkanal 56 und gegen den Auslaßkanal 58 um je 130 bis 140°, vorzugsweise 135°, versetzt angeordnet. Je nach axialer Länge der Schwenkkolbenmaschine können die beiden dargestellten Zündkerzen 50 durch eine einzige Zündkerze ersetzt oder durch eine oder mehrere weitere Zündkerzen ergänzt werden.

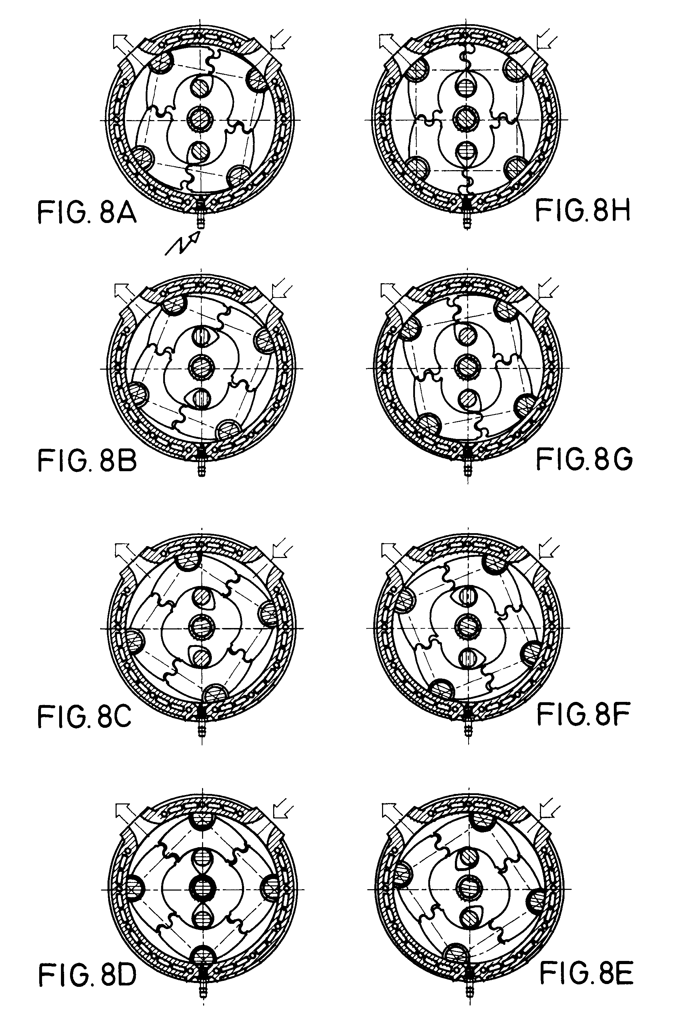

Die Arbeitsweise der in Fig. 4 bis 7 dargestellten Schwenkkolbenmaschine als Viertakt-Ottomotor ist in Fig. 8 dargestellt. Fig. 8.1 stimmt mit Fig. 4 überein und zeigt die Stellung der beweglichen Bauteile im Zündzeitpunkt. Dabei wird in der in Fig. 8.1 unteren Gehäusekammer 18 zuvor angesaugtes und verdichtetes Brennstoff-Luftgemisch gezündet, während aus der linken Gehäusekammer 18' verbranntes Gemisch durch den Auslaß 92 verdrängt wird, in die obere Gehäusekammer 18'' frisches Gemisch durch den Einlaß 90 angesaugt wird und in der rechten Gehäusekammer 18''' Gemisch verdichtet wird.

Gemäß Fig. 8.2 haben sich die vier Kolben 20 gemeinsam mit der zentralen Welle im Uhrzeigersinn um 10° weitergedreht, während die beiden Kurvenfolgeglieder 38 sich, ebenfalls im Uhrzeigersinn, um je 40° weitergedreht haben. In entsprechender Weise schreitet gemäß Fig. 8.3 bis 8.8 die Drehung der zentralen Welle 30 mit den Kolben 20 um jeweils 10°, und die Drehung der Kurvenfolgeglieder 38 um jeweils 40° fort, so daß nach einem vollen Viertaktzyklus, der bei Erreichen der Stellung gemäß Fig. 8.1 abgeschlossen ist, die zentrale Welle 30 und die Kolben 20 sich gemeinsam um 90° gedreht haben, während die Kurvenfolgeglieder 38 je eine volle Umdrehung um 360° um je ihre eigene, ortsfeste Achse C ausgeführt haben. Bei einer vollen Umdrehung der zentralen Welle 30 finden somit vier vollständige Viertaktzyklen statt.

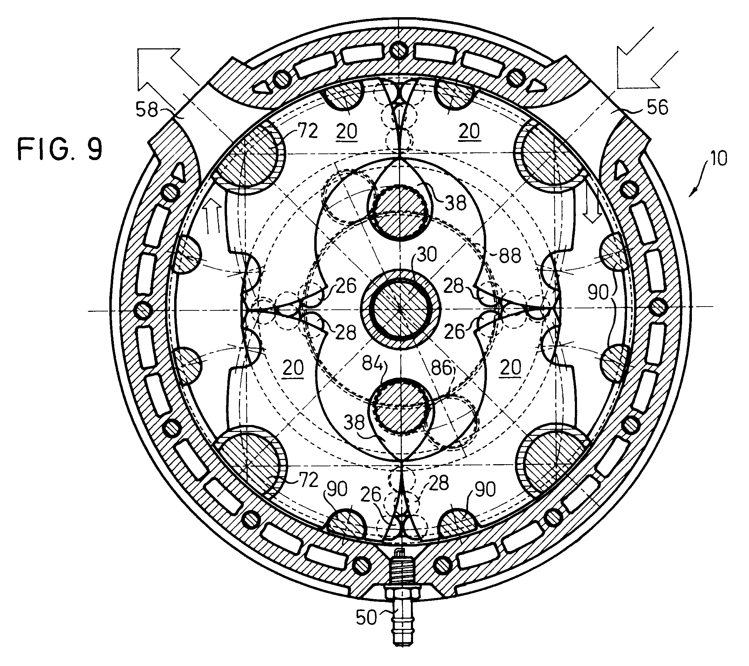

Die in Fig. 9 dargestellte, ebenfalls als Viertakt-Ottomotor ausgebildete Schwenkkolbenmaschine unterscheidet sich von der in Fig. 4 bis 8 dargestellten dadurch, daß der Ring 78 mit der Scheibe 80 zusätzlich durch acht schlanke Stäbe 90 verbunden ist, an denen die Kolben 20 in ihren Schwenkendstellungen derart anschlagen, daß sie die Umfangswand 12 des Gehäuses 10 nicht berühren können. Außerdem sind die in Fig. 4 bis 8 und auch in Fig. 1 bis 3 dargestellten, im wesentlichen zylinder- oder evolventenförmigen Verzahnungen 26 und 28, die sich über die gesamte axiale Breite der Kolben 20 erstrecken, gemäß Fig. 9 durch Verzahnungen 26 und 28 ersetzt, die von einzelnen, in axialer und radialer Richtung gegeneinander versetzten, halbkugelförmigen Vorsprüngen und komplementären Vertiefungen gebildet sind.

Die im Vorstehenden dargestellten und beschriebenen Schwenkkolbenmaschinen lassen sich mit entsprechenden Änderungen ihrer konventionellen Bauteile auch als Einspritz-Otto- oder Dieselmotor, als pneumatischer oder hydraulischer Motor oder als Verdichter oder Pumpe betreiben.

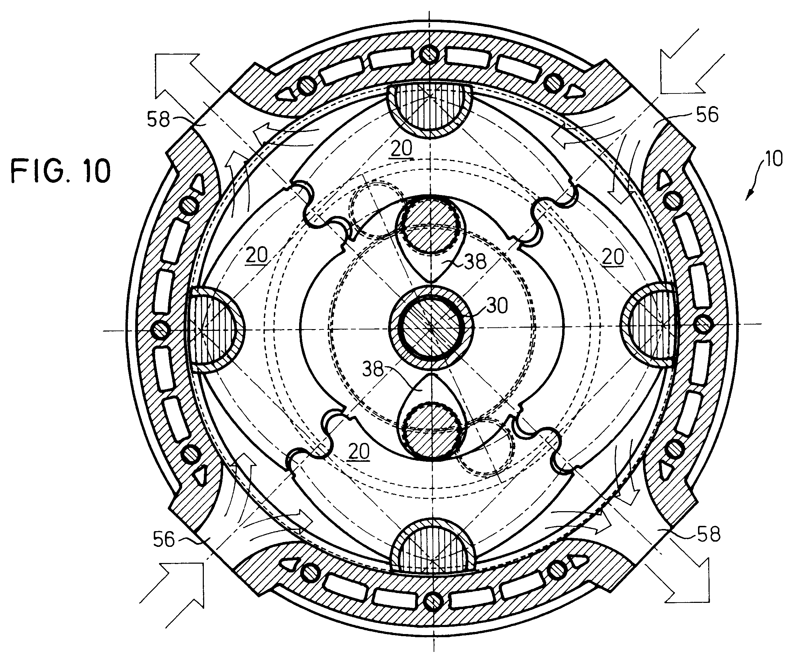

Bei der in Fig. 10 dargestellter, als Pumpe oder Verdichter ausgebildeten Schwenkkolbenmaschine weist das Gehäuse 10 an seiner Umfangswand 12 zwei Einlaßkanäle 56 und zwei Auslaßkanäle 58 auf, die in Abständen von 90° derart angeordnet sind, daS auf jeden Einlaßkanal 56 ein Auslaßkanal 58 folgt, und umgekehrt. Mit dieser Anordnung von Ein- und Auslaßkanälen kann die Schwenkkolbenmaschine gemäß Fig. 10 auch als pneumatischer oder hydraulischer Motor laufen.

## Patentansprüche

1. Schwenkkolbenmaschine mit
- einem Gehäuse (10), in dem mehrere Gehäusekammern (18) zwischen zwei Stirnwänden (14) rings um eine zentrale Gehäuseachse (A) ausgebildet sind,
- mehreren Kolben (20), die um je eine zur Gehäuseachse (A) parallele Kolbenachse (B) schwenkbar sind und gegen die beiden Stirnwände (14) abgedichtet sind,
- einer zentralen Welle (30), die um die Gehäuseachse (A) drehbar ist und mit den Kolben (20) in Antriebsverbindung steht, und
- Ein- und Auslaßkanälen (56, 58) zur Zu- bzw. Abführen eines Fluids zu bzw. von den Gehäusekammern (18),
dadurch **gekennzeichnet,** daß
- die Kolben (20) als zweiarmige Hebel ausgebildet sind, deren Arme mit je einem benachbarten Kolbenarm über ineinandergreifende Verzahnungen (26, 28), in abdichtendem Wälzeingriff stehen, und
- jede Gehäusekammer (18) von einem Paar in Wälzeingriff stehender Kolbenarme begrenzt ist.

2. Schwenkkolbenmaschine Anspruch 1,
dadurch **gekennzeichnet,** daß die Kolben (20) an ihrer der Gehäuseachse (A) zugewandten Seite je eine Lauffläche (40) aufweisen, an der ein mit der zentralen Welle (30) verbundenes, exzentrisches Kurvenfolgeglied (38) derart entlangbewegbar ist, daß jeder Kolbenstellung eine definierte Winkelstellung der zentralen Welle (30) zugeordnet ist.

3. Schwenkkolbenmaschine nach Anspruch 2,
dadurch **gekennzeichnet,** daß die Laufflächen (40) benachbarter Kolben (20) sich in bestimmten Kolbenstellungen lückenlos aneinander anschließen.

4. Schwenkkolbenmaschine nach Anspruch 2 oder 3,
dadurch **gekennzeichnet,** daß mit der zentralen Welle (30) zwei Kurvenfolgeglieder (38) verbunden sind, die einander in bezug auf die Gehäuseachse (A) diametrol gegenüberliegen.

5. Schwenkkolbenmaschine nach einem der Ansprüche 1 bis 4,
dadurch **gekennzeichnet,** daß die Kolben (20) an einem gemeinsam mit der zentralen Welle (30) umlaufenden Käfig (72, 78, 80) gelagert sind und das Gehäuse (10) je mindestens einen Einlaßkanal (56) und einen Auslaßkanal (58) aufweist, die unmittelbar von den Kolben (20) gesteuert sind.

6. Schwenkkolbenmaschine nach Anspruch 5 in Verbindung mit Anspruch 4,
dadurch **gekennzeichnet,** daß die Kurvenfolgeglieder (38) um je eine gehäusefeste Achse C drehbare Exzenterwalzen sind.

7. Schwenkkolbenmaschine nach Anspruch 6,
dadurch **gekennzeichnet,** daß die zentrale Welle (30) mit jedem Kurvenfolgeglied (38) durch ein Zahnradgetriebe (84, 86, 88) mit dem Übersetzungsverhältnis 1:4 verbunden ist.

8. Schwenkkolbenmaschine nach einem der Ansprüche 1 bis 7,
dadurch **gekennzeichnet,** daß jeder Gehäusekammer (18) zwei Brennräume (48) zugeordnet sind, die in je einem der beiden zugehörigen Kolben (20) ausgebildet sind.

9. Schwenkkolbenmaschine nach Anspruch 8,
dadurch **gekennzeichnet,** daß jede Gehäusekammer (18) zwei Zündkerzen (50) aufweist, die je einem der beiden zugehörigen Brennräume (48) zugeordnet sind.

## Claims

1. A rocking-type piston engine, comprising
- a housing (10) in which a plurality of housing chambers (18) are defined all around a central housing axis (A) between two end walls (14),
- a plurality of pistons (20), each being pivotable about a piston axis (B), which is in parallel with the housing axis (A) and each being sealed with respect to both end walls (14),
- a central shaft (30) which is rotatable about the housing axis (A) and in driving connection with the pistons (20), and
- inlet and outlet passages (56, 58) for supply and discharge, respectively, of a fluid into and out of the housing chambers (18),
**characterized** in that
- the pistons (20) are two-armed levers, each piston arm being in sealing rolling engagement with a respective adjacent piston arm through meshing teeth (26, 28), and
- each housing chamber (18) is defined by a pair of piston arms in rolling engagement.

2. The rocking-type piston engine as claimed in claim 1
**characterized** in that
the pistons (20) each having a running surface (40) at the side facing the housing axis (A) along which surface an eccentric cam (38) connected to the central shaft (30) is movable such that a defined angular position of the central shaft (30) is associated with each piston position.

3. The rocking-type piston engine as claimed in claim 2
**characterized** in that
the running surfaces (40) of adjacent pistons (20) line up with each other without any intermediate gaps at certain piston positions.

4. The rocking-type piston engine as claimed in claim 2 or claim 3
**characterized** in that
two cams (38) are connected to the central shaft (30) and are disposed diametrically opposite each other with respect to the housing axis (A).

5. The rocking-type piston engine as claimed in any one of claims 1 to 4
**characterized** in that
the pistons (20) are supported by a cage (72, 78, 80) revolving together with the central shaft (30), and the housing (10) has at least one inlet passage (56) and at least one outlet passage (58) which are controlled directly by the piston (20).

6. The rocking-type piston engine as claimed in claim 5 in combination with claim 4
**characterized** in that
the cams (38) are eccentric rollers, each of which is rotatable about an axis C which is fixed with respect to the housing.

7. The rocking-type piston engine as claimed in claim 6
**characterized** in that
the central shaft (30) is connected to each cam (38) by a gear train (84, 86, 88) having a transmission ratio of 1:4.

8. The rocking-type piston engine as claimed in any one of claims 1 to 7
**characterized** in that
two combustion chambers (48), each formed in a respective one of the two corresponding pistons (20), are associated with each housing chamber (18).

9. The rocking-type piston engine as claimed in claim 8
**characterized** in that
each housing chamber (18) comprises two spark plugs (50), each associated with a respective one of the two corresponding combustion chambers (48).

## Revendications

1. Moteur à pistons oscillants comprenant
- un carter (10) dans lequel plusieurs chambres de carter (18) sont formées entre deux parois frontales (14) autour d'un axe central de carter (A),
- plusieurs pistons (20) qui oscillent chacun autour d'un axe de piston (B) parallèle à l'axe de carter (A) et sont en contact étanche avec les deux parois frontales (14),
- un arbre central (30) tournant autour de l'axe de carter (A) et en liaison d'entraînement avec les pistons (20), et
- des conduits d'admission et d'échappement (56, 58) pour l'amenée, respectivement l'évacuation d'un fluide aux, respectivement des chambres de carter (18),
**caractérisé en ce que**
- les pistons (20) ont la configuration de leviers à deux bras dont les bras sont chacun en contact étanche à roulement sans glissement avec un bras de piston voisin par l'intermédiaire de dentures engrenées (26, 28), et
- chaque chambre de carter (18) est délimitée par une paire de bras de pistons en contact à roulement sans glissement.

2. Moteur à pistons oscillants selon la revendication 1,
**caractérisé en ce que** les pistons (20) présentent du côté dirigé vers l'axe de carter (A) une surface de roulement (40) le long de laquelle un organe suiveur de courbe (38) excentré relié à l'arbre central (30) peut se déplacer de façon qu'à chaque position de piston corresponde une position angulaire définie de l'arbre central.

3. Moteur à pistons oscillants selon la revendication 2,
**caractérisé en ce que** les surfaces de roulement (40) de pistons (20) adjacents se raccordent l'une à l'autre de façon continue dans des positions de pistons déterminées.

4. Moteur à pistons oscillants selon la revendication 2 ou 3,
**caractérisé en ce que** deux organes suiveurs de courbes (38) diamétralement opposé par rapport à l'axe de carter (A) sont reliés à l'arbre central (30).

5. Moteur à pistons oscillants selon l'une quelconque des revendications 1 à 4,
**caractérisé en ce que** les pistons (20) sont logés dans une cage (72, 78 ,80) tournant avec l'arbre central (30) et le carter possède chaque fois au moins un conduit d'admission (56) et un conduit d'échappement (58) qui sont commandés directement par les pistons (20).

6. Moteur à pistons oscillants selon la revendication 5 en combinaison avec la revendication 4,
**caractérisé en ce que** les organes suiveurs de courbes (38) sont des galets excentrés pivotant autour d'un axe C fixe par rapport au carter.

7. Moteur à pistons oscillants selon la revendication 6,
**caractérisé en ce que** l'arbre central (30) est relié à chaque organe suiveur de courbe (38) par l'intermédiaire d'une transmission par engrenages (84, 86, 88) dont le rapport de transmission est de 1:4.

8. Moteur à pistons oscillants selon l'une quelconque des revendications 1 à 7,
**caractérisé en ce que** deux chambres d'explosion (48) sont associées à chaque chambre de carter (18), qui sont formées chacune dans l'un des deux pistons (20) associés.

9. Moteur à pistons oscillants selon la revendication 8,
**caractérisé en ce que** chaque chambre de carter (18) possède deux bougies d'allumage (50) qui sont chacune affectée à l'une des deux chambres d'explosion (48) associées.
